# FASCICULE DE BREVET EUROPEEN

(11) **EP 0 364 360 B1**
(45) Date de publication et mention de la délivrance du brevet: **24.03.1993**
(21) Numéro de dépôt: 89402807.5
(22) Date de dépôt: 11.10.1989
(51) Int. Cl.: B29C 67/14, F02K 1/12, C04B 35/52, B29C 69/00

(54) **Procédé de fabrication de pièces composites constituées d'un voile et d'un renfort**
Verfahren zum Herstellen von Verbundwerkstoffteilen, bestehend aus einem Flies und einer Verstärkung
Method for producing composite parts composed of a fleece and a reinforcement

(30) Priorité: 14.10.1988 FR 8813590
(43) Date de publication de la demande: 18.04.1990
(73) Titulaire: SOCIETE EUROPEENNE DE PROPULSION, 92150 Suresnes (FR)
(72) Inventeur: Vives, Michel, F-33320 Eysines (FR); Pestourie, Eric, F-33700 Merignac (FR)
(74) Mandataire: Joly, Jean-Jacques

(56) Documents cités:
- EP-A- 0 033 638
- EP-A- 0 072 007
- EP-A- 0 100 697
- EP-A- 0 214 113
- FR-A- 2 401 888
- GB-A- 2 112 699
- GB-A- 2 159 460
- US-A- 1 947 695
- US-A- 2 781 552
- US-A- 4 201 611
- US-A- 4 318 955
- US-A- 4 637 550

## Description

La présente invention concerne la fabrication de pièces en matériau composite constituées d'un voile et d'un renfort. Plus précisément, l'invention concerne un procédé permettant de réaliser en un matériau composite des pièces constituées d'un voile rigide, tel qu'une feuille ou plaque mince de forme déterminée, muni sur au moins une de ses faces d'un renfort solidaire du voile et formé de manière à conférer aux pièces la raideur et les propriétés mécaniques nécessaires en vue de leur utilisation.

Une application particulière de l'invention est la fabrication de volets internes -ou volets chauds- de tuyère de turboréacteur, en matériau composite. De tels volets sont formés en effet par un voile muni sur une de ses faces d'un renfort ayant par exemple la forme d'un H.

Un mode de réalisation d'un volet en deux parties avec un élément en métal à haute résistance mécanique et un élément en céramique ou composite carbone-carbone est décrit dans le document US-4 637 750.

Une pièce en matériau composite est constituée par une texture fibreuse densifiée par une matrice. Les matériaux constitutifs de la texture fibreuse et de la matrice sont choisis en fonction des conditions d'utilisation de la pièce. S'agissant de pièces composites qui, comme les volets internes de tuyère de turboréacteur, sont exposées à des contraintes thermomécaniques élevées, elles sont typiquement réalisées avec une texture fibreuse en carbone ou carbure de silicium et une matrice en carbone ou en céramique, notamment en carbure de silicium.

Le document EP-A-0 033 638 décrit un procédé de fabrication de panneaux en matière plastique renforcée de fibres par moulage sous pression de strates pré-imprégnées.

Pour fabriquer une pièce ayant une forme complexe, une technique connue consiste à réaliser des préformes fibreuses de parties constitutives de la pièce à réaliser de formes simples, puis à assembler les préformes par exemple par moulage avec une résine thermoformable afin d'obtenir une préforme de la pièce à réaliser, et enfin à densifier la préforme ainsi obtenue par le matériau constitutif de la matrice, la résine thermoformable étant éliminée.

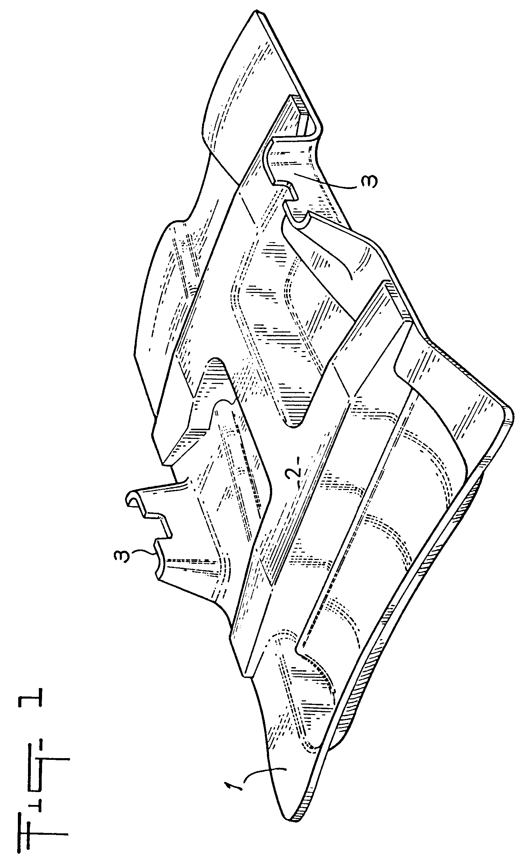

Cette technique connue a été mise en oeuvre par la demanderesse pour réaliser des volets chauds de tuyère de turboréacteur tels que celui illustré par la figure 1. La préforme du voile 1 est réalisée par empilage de strates d'une texture fibreuse bidimensionnelle, telle qu'un tissu. La preforme du renfort 2 est réalisée par empilement de strates d'une texture fibreuse bidimensionnelle pour former une plaque, maintien en forme de la plaque par imprégnation au moyen d'une résine thermoformable et usinage du renfort en forme de H dans la plaque ainsi maintenue en forme. Les préformes du voile et du renfort sont assemblées dans un moule pour obtenir une préforme d'un volet par moulage avec une résine thermoformable. Lors du moulage, le voile est conformé comme illustré sur la figure 1 de manière à obtenir le relief désiré, à réaliser des oreilles ou pattes 3, et à amener le voile et le renfort en parfait contact mutuel. La densification de la préforme du volet, maintenue dans un outillage, est réalisée par infiltration en phase vapeur du matériau constitutif de la matrice, par exemple du carbure de silicium, au sein de la texture fibreuse, la résine thermoformable étant par exemple éliminée thermiquement lors de la montée en température précédant l'infiltration de la matrice. Lors de son montage, le volet est fixé à l'extrémité d'un actionneur qui communique les mouvements désirés au volet ainsi qu'aux deux volets adjacents qui s'appuient sur les pattes 3.

Il est apparu que cette technique pouvait présenter des inconvénients. Ainsi, un risque de séparation entre le voile et le renfort au cours de l'utilisation du volet a été relevé. Par ailleurs, la complexité des moules de fabrication rend le procédé coûteux et peu adapté à une fabrication en série.

Aussi, la présente invention a-t-elle pour but de fournir un procédé permettant d'obtenir des pièces en matériau composite constituées d'un voile et d'un renfort ne présentant pas le risque précité de séparation entre voile et renfort et avec un coût de fabrication réduit pour une production en série.

Ce but est atteint grâce à un procédé qui comprend, conformément à l'invention, les étapes consistant à :
- réaliser un profilé en une structure fibreuse rigidifiée par imprégnation par un liant thermoformable, le profilé ayant une section droite correspondant aux dimensions d'une ébauche non compactée de la pièce à réaliser avec le voile et le renfort réunis,
- usiner une ébauche de la pièce à réaliser dans un tronçon du profilé,
- mettre en forme ladite ébauche sous presse pour obtenir une préforme ayant une forme et des dimensions voisines de celles de la pièce à réaliser, et
- après élimination du liant thermoformable, densifier la préforme par infiltration chimique en phase vapeur de la matrice du matériau composite au sein de la texture fibreuse.

L'utilisation du profilé de départ permet de réaliser directement une ébauche de la pièce par usinage d'un tronçon du profilé, plutôt que de réaliser séparément des ébauches du voile et du renfort et de les assembler ensuite par moulage avec une résine thermoformable. Ainsi, l'interface entre le voile et le renfort ne constitue plus une zone de plus faible cohésion, ce qui réduit le risque de séparation entre voile et renfort. De plus, il n'est plus nécessaire de faire appel à un moule relativement complexe.

Avantageusement, le profilé est en une structure fibreuse tridimensionnelle par exemple une structure tridimensionnelle tissée ou une structure formée par empilement de strates d'une texture bidimensionnelle avec liaison des strates entre elles par aiguilletage ou implantation de fils perpendiculairement avec strates. Ainsi, se trouve éliminé le risque de délaminage (séparation dans le plan d'une strate) qui pouvait être observé avec des structures fibreuses formées par simple empilement de texture bidimensionnelle, lors de la mise en oeuvre de la technique antérieure évoquée plus haut, en particulier au moment du démontage de l'outillage de densification.

Avantageusement encore, la pièce composite est munie d'une protection anti-oxydation, en particulier lorsqu'elle doit être exposée, au cours de son utilisation, à des températures relativement élevées en milieu oxydant.

D'autres particularités et avantages du procédé conforme à l'invention ressortiront à la lecture de la description faite ci-après, à titre indicatif mais non limitatif, en référence aux dessins annexés sur lesquels :
- la figure 1, déjà citée, illustre un volet chaud de tuyère de turboréacteur en matériau composite tel que fabriqué en mettant en oeuvre un technique dont le principe est connu, et
- les figures 2 à 4 illustrent trois étapes successives de la fabrication d'un volet chaud de tuyère de turboréacteur en matériau composite suivant un procédé conforme à l'invention.

Un mode particulier de mise en oeuvre de l'invention sera décrit ci-après dans le cadre de la fabrication de volets chauds de tuyère de turboréacteur en sortie de canal post-combustion. Il est toutefois à noter que le procédé selon l'invention est d'une façon plus générale applicable à la fabrication de toute pièce ayant une partie en forme de voile et une deuxième partie en forme de renfort solidaire de la première partie.

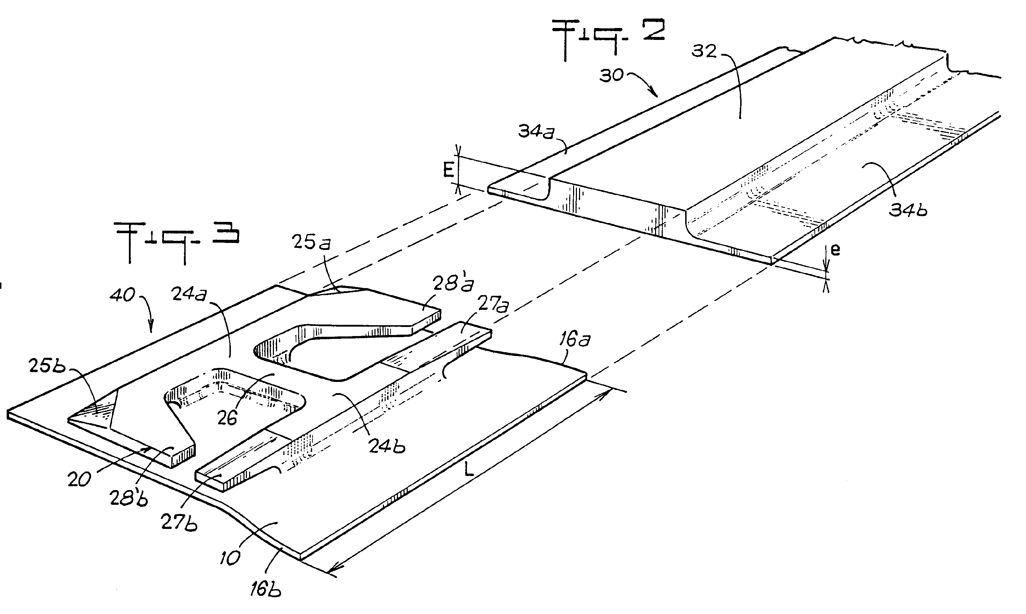

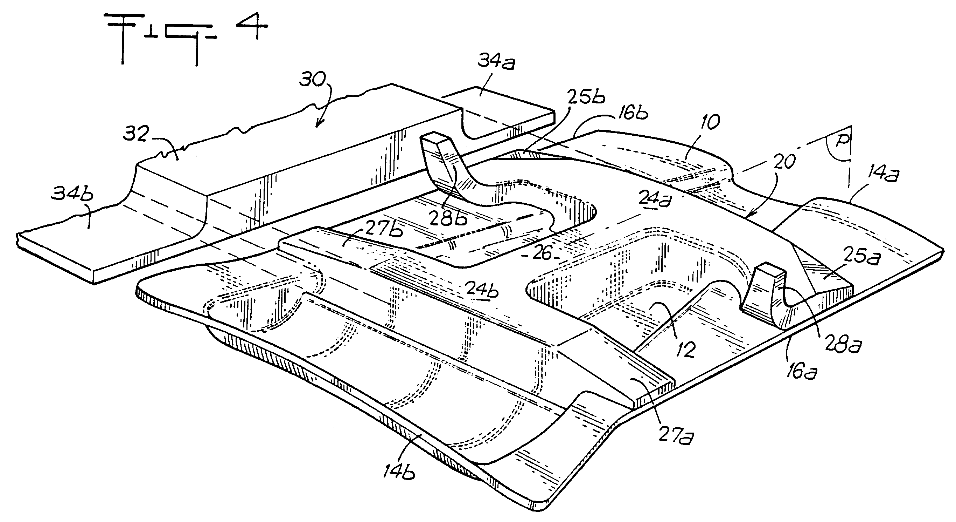

On se réfère tout d'abord à la figure 4 qui montre le volet tel qu'obtenu par le procédé conforme à l'invention. Ce volet a une forme générale semblable à celle du volet de la figure 1 et comprend un voile 10 sur une face duquel est formé un renfort 20 solidaire du voile.

Le voile 10 est constitué par une feuille rigide relativement mince de forme générale sensiblement rectangulaire. Dans sa partie médiane, en direction longitudinale (direction ici définie comme étant celle parallèle au plan de symétrie P du volet), le voile 10 forme une dépression 12 qui s'étend en s'élargissant depuis un bord 14a du voile jusqu'au bord opposé 14b parallèle au bord 14a. A son extrémité située le long du bord 14b, la dépression 12 est limitée par le bord du voile qui ferme l'extrémité de la dépression, alors que la dépression 12 est ouverte à son autre extrémité le long du bord 14a. Les autres côtés opposés 16a, 16b du voile 10 sont parallèles l'un à l'autre sur toute leur longueur depuis le bord 14a, à l'exception de la partie terminale voisine du bord 14b où les côtés 16a, 16b s'écartent l'un de l'autre, la largeur du voile 10 croissant donc dans cette partie terminale jusqu'au bord 14b.

Le renfort 20 a une forme générale en H avec deux nervures transversales 24a, 24b situées sensiblement à égales distances des bords 14a et 14b, s'étendant sur toute la largeur du voile 10, et une nervure longitudinale médiane 26 qui relie entre elles les parties centrale des deux nervures 24a, 24b. A ses deux extrémités, la nervure 24a est prolongée par des doigts 28a, 28b dirigés vers la nervure opposée 24b et recourbés vers le haut, c'est-à-dire en s'écartant du voile 10. Les doigts 28a, 28b sont destinés à permettre la liaison entre le volet et les volets adjacents lors du montage des volets.

A l'exception des parties terminales des nervures 24a, 24b, la surface supérieure du renfort 20 est sensiblement plane et parallèle au voile 10. Aux deux parties terminales de la nervure 24a, un pan coupé 25a, 25b est formé dans l'angle opposé à celui d'où fait saillie le doigt 28a, 28b. Des pans coupés 27a, 27b sont également formés dans les parties terminales de la nervure 24b, celle-ci s'amincissant donc à ses extrémités.

On notera que la face inférieure du renfort 20 épouse exactement le profil du voile 10, le renfort et le voile étant intimement liés l'un à l'autre.

Conformément à l'invention, le volet est fabriqué à partir d'un profilé 30 tel qu'illustré par la figure 2. Le profilé est constitué par une structure fibreuse rigidifiée par imprégnation au moyen d'une résine thermoformable.

En section droite, le profilé 30 a une forme correspondant aux dimensions d'une ébauche non compactée du volet à réaliser. Comme le montre la figure 2, le profilé 30 a une partie centrale 32 d'épaisseur E constante prolongée de chaque côté par deux ailes 34a, 34b d'épaisseur e constante inférieure à celle de la partie centrale. Ainsi qu'il ressortira de la suite de la description, l'épaisseur e est choisie de telle sorte qu'après compactage et mise en forme les ailes 34a, 34b puissent former les parties du voile 30 situées de part et d'autre du renfort, c'est-à-dire du côté extérieur des nervures 24a et 24b, tandis que l'épaisseur E est choisie de telle sorte qu'après usinage, compactage et mise en forme, la partie centrale 32 puisse former le reste du volet, c'est-à-dire le renfort 20 et la partie du voile s'étendant entre les bords extérieurs des nervures 24a et 24b. La structure fibreuse formant le profilé 30 est réalisée à partir de fibres choisies en fonction de l'application envisagée, en l'espèce de préférence des fibres en carbure de silicium. D'autres fibres réfractaires pourraient être utilisées, comme par exemple des fibres en alumine. Différentes techniques peuvent être utilisées pour réaliser le profilé 30. Celui-ci peut être formé par empilement de strates d'une texture bidimensionnelle, tel qu'un tissu, découpées aux dimensions voulues. De préférence, pour éviter un risque de délaminage, les strates sont liées entre elles par aiguilletage ou par implantation de fils en carbone perpendiculairement aux strates, de manière à former une structure tridimensionnelle. L'implantation de fils est réalisable comme décrit dans le document FR-A-2 565 262. En variante, le profilé 30 peut encore être réalisé par tissage tridimensionnel.

Le profilé 30 est découpé en tronçons dans chacun desquels est usinée une ébauche de volet 40 telle qu'illustrée par la figure 3. La longueur L d'un tronçon est choisie de manière, après compactage et mise en forme, à correspondre à la largeur maximale du voile 10.

Comme le montre la figure 3, l'usinage consiste à former les nervures 24a, 24b et 26 du renfort 20 dans la partie centrale 32 du profilé. Les nervures 24a, 24b sont formées avec les pans coupés 25a, 25b et 27a, 27b, et avec les parties 28′a, 28′b destinées à former les doigts 28a, 28b, non recourbées vers le haut. L'usinage comprend également la formation des côtés 16a, 16b du voile 10.

L'ébauche ainsi obtenue est ensuite mise en forme sous presse et à chaud pour obtenir une préforme dont la forme et les dimensions sont voisines de celles du volet montré par la figure 4.

La mise en forme comprend notamment la formation de la dépression 12 dans le voile 10, la formation des doigts 28a, 28b par courbure des parties 28′a, 28′b, ainsi qu'un compactage de la structure fibreuse.

La préforme rigidifiée grâce à la résine thermoformable est ensuite mise en place dans un outillage pour la phase de formation de la matrice. La matrice est constituée de préférence par du carbure de silicium mis en place au sein de la structure fibreuse par infiltration chimique en phase vapeur. L'élimination de la résine thermoformable se produit lors de la montée en température précédant l'infiltration du carbure de silicium, le maintien en forme de la préforme étant assuré par l'outillage dans lequel elle est en place. Un procédé d'infiltration chimique en phase vapeur du carbure de silicium est décrit dans le document FR-A-2 401 888.

Lorsque la densification est terminée, le volet est soumis à un traitement de protection contre l'oxydation pour permettre au volet de résister en atmosphère oxydante à haute température. Ce traitement consiste par exemple, comme connu en soi, à déposer une couche de verre, et à former une couche de protection externe en carbure de silicium déposé en phase vapeur. La protection interne en verre assure, lors de l'utilisation du volet, une fonction de barrière vis-à-vis de l'oxygène et de cicatrisation de micro-fissures.

## Revendications

1. Procédé de fabrication d'une pièce constituée d'un voile (10) et d'un renfort (20) et réalisée en un matériau composite comprenant une préforme fibreuse densifiée par une matrice, caractérisé en ce qu'il comprend les étapes consistant à :
- réaliser un profilé (30) en une structure fibreuse rigidifiée par imprégnation par un liant thermoformable, le profilé (30) ayant une section droite correspondant aux dimensions d'une ébauche non compactée de la pièce à réaliser avec le voile (10) et le renfort (20) réunis,
- usiner une ébauche (40) de la pièce à réaliser dans un tronçon du profilé (30),
- mettre en forme ladite ébauche (40) sous presse pour obtenir une préforme ayant une forme et des dimensions voisines de celles de la pièce à réaliser, et
- après élimination du liant thermoformable, densifier la préforme par infiltration chimique en phase vapeur de la matrice au sein de la texture fibreuse

2. Procédé selon la revendication 1, caractérisé en ce que le profilé (30) est en une structure fibreuse tridimensionnelle.

## Patentansprüche

1. Herstellungsverfahren für ein Stück aus einem Vlies (10) und einer Verstärkung (20) aus einem Verbundwerkstoff, umfassend eine faserartige Vorform, die durch eine Matrize verdichtet ist, dadurch gekennzeichnet, daß es folgende Phasen aufweist, während derer
- ein Profilstück (30) aus einem durch Imprägnierung mit einem wärmeformbaren Bindemittel verhärteten Fasergefüge hergestellt wird, wobei das Profilstück (30) rechtwinkligen Querschnitts ist und den Abmessungen eines nicht verfestigten Vorprofils des mit dem Vlies (10) und der Verstärkung (20), die zusammengesetzt sind, herzustellenden Stücks entspricht,
- einen Rohling (40) des in einem Teilstück des Profilstücks (30) herzustellenden Stücks bearbeitet wird,
- der besagte Rohling (40) in der Presse in Form gebracht wird, um eine Vorform zu erhalten, die in Form und Abmessungen in etwa dem herzustellenden Stück entspricht, und
- die Vorform nach Entfernung des wärmeformbaren Bindemittels durch chemische Infiltration in Gasphase der Matrize innerhalb des Fasergefüges verdichtet wird.

2. Verfahren gemäß Anspruch 1, dadurch gekennzeichnet, daß das Profilstück (30) ein dreidimensionales Fasergefüge ist.

## Claims

1. Process for the manufacture of a component comprising a web (10) and a reinforcement member (20) and made from a composite material comprising a fibrous preform that is densified by a matrix,
characterized in that it comprises the steps of :
- providing a profiled section (30) from a fibrous structure that is rigidified by impregnation with a thermoformable binder, said profiled section (30) having a cross-section corresponding to the dimensions of a non-compacted blank of the component to be formed with the web (10) and the reinforcement member (20) in a single unit,
- machining a blank (40) of the component to be produced from a length of the profiled section (30),
- press forming said blank (40) so as to obtain a preform having a shape and dimensions approximating those of the component to be produced, and
- after elimination of the thermoformable binder, densifying the preform by chemical vapor infiltration of the matrix within the fibrous texture.

2. Process according to claim 1, characterized in that the profiled section (30) is from a three-dimensional fibrous structure.
